## Europäisches Patentamt

(19) **European Patent Office**

**Office européen des brevets**

(11) Publication number: **0 006 325**
**B1**

(12) **EUROPEAN PATENT SPECIFICATION**

(45) Date of publication of patent specification: **04.05.83**

(51) Int. Cl.³: **H 04 L  11/16, H 04 L  5/00, H 04 J  3/00, G 06 F  3/04**

(21) Application number: **79301065.3**

(22) Date of filing: **05.06.79**

(54) **Data transmission system for interconnecting a plurality of data processing terminals.**

(30) Priority: **05.06.78 US  912780**

(43) Date of publication of application:
**09.01.80 Bulletin 80/1**

(45) Publication of the grant of the patent:
**04.05.83 Bulletin 83/18**

(84) Designated Contracting States:
**DE FR GB IT SE**

(56) References cited:
**DE - A - 1 964 009**
**DE - A - 2 108 835**
**DE - A - 2 710 173**
**DE - B - 2 000 898**
**DE - B - 2 045 445**
**DE - B - 2 048 037**
**GB - A - 1 350 800**
**GB - A - 1 457 058**
**GB - A - 1 481 275**
**US - A - 3 659 271**
**US - A - 4 038 494**
**US - A - 4 071 706**
**US - A - 4 106 104**

(73) Proprietor: **FMC CORPORATION**
**200 E. Randolph Drive**
**Chicago Illinois 60601 (US)**

(72) Inventor: **Champlin, Keith S.**
**5437 Elliot Avenue**
**Minneapolis Hennepin, Minnesota (US)**
Inventor: **Preimesberger, Ernest C.**
**939-111th Avenue NW.**
**Coon Rapids Anoka, Minnesota 55433 (US)**
Inventor: **Meyer, Larry A.**
**733 Ballantyne Lane N.E.**
**Spring Lake Anoka, Minnesota 55432 (US)**
Inventor: **Miller, George W.**
**19961 Poppy Street N.W.**
**Anoka, Minnesota 55303 (US)**

(74) Representative: **Foster, David Martyn et al,**
**Mathisen, Macara & Co. Lyon House Lyon Road**
**Harrow Middlesex HA1 2ET (GB)**

Courier Press, Leamington Spa, England

Data transmission system for interconnecting a plurality of data processing terminals.

The invention relates to data bus systems for interconnecting and transmitting information between a plurality of serially arranged terminals.

There are two basic types of data buses which are used in large scale data distribution, mainly passive buses and active buses. The present invention is concerned with active buses.

An active bus is one which employs active terminals, each of which receives data from one terminal and then re-transmits the data (or transmits new data) to the next terminal in the line, with each terminal acting as a potential transmitting and/or receiving point. Therefore, each link between terminals comprises a complete transmission path.

An active data bus system is disclosed in U.S. Patent No. 3659271. This prior Patent shows a system having a plurality of terminals arranged in a closed loop around which data is distributed serially. Each terminals can selectively receive and re-transmit data, retain received data for use by an associated processor, or inject data in the loop from an associated processor. The data is transmitted as a series of time frames each preceded by a control word, and each terminal observes the control word of each time frame to determine whether it is to initiate and transmit data. The system has a loop synchronizer for controlling the overall timing and synchronization of the system.

In the prior system referred to above, the parameters of the system are such that the time of propagation of data around the loop is insignificant and does not affect synchronization.

The invention is concerned with the general type of system referred to above but more specifically with systems whose parameters are such that propagation time is significant and must be allowed for in the process of synchronizing the terminals. In such systems, a synchronizing signal transmitted on to the system by a controller terminal will take a significant time to travel to each terminal of the system, this time being dependent on the distance of each such receiving terminal from the controller terminal. In each terminal has a timing reference, such as a clock or counter, which is simply reset on receipt of the synchronizing signal, each such timing reference will therefore be set (by the same synchronizing signal) to different values (that is, to values representing different real times). Each receiving terminal uses its timing reference as the means to determine when to transmit data onto the system.

Problems can arise in such a system if the system has more than one terminal which can act as the controller terminal. Systems of this general type are known for example for DE—B—2048037 and DE—A—2964009. If one such controller terminal takes over as the active controller terminal from the previously acting controller terminal, the new controller terminal will transmit a new synchronizing signal on to the system. This will reset the timing references of all the receiving terminals but because the distance between each receiving terminal and the new controller terminal will be different from the distance between that receiving terminal and the previously acting controller terminal, the timing reference at each receiving terminal will undergo a shift solely as a result of the new controller terminal taking over. During the change-over, this may cause confusion because some receiving terminals may be operating to their previous timing references while others may be operating for their new timing references. Furthermore, there may be applications in which it is required that a receiving terminal carries out operations at intervals which are regularly spaced apart in real time and the shift in timing reference described above may prevent this. The invention aims at overcoming such problems.

According to the invention, there is provided a data bus system, comprising a plurality of terminals interconnected in a continuous chain, a plurality of the terminals being broadcast terminals each capable of transmitting serial data onto the continuous chain during a respective time slot and removing the data therefrom after it has been transmitted around the continuous chain, each one of a plurality of the terminals being designated as being capable of acting as a controller terminal at any time to transmit a control word onto the continuous chain which control word includes a synchronizing signal which provides a time reference to the terminals by means of which they can identify their respective time slots and which control word also identifies that controller terminal, each terminal including a time reference unit emitting regular time signals and a synchronizing circuit which stores a plurality of predetermined time periods each being representative of the signal propagation time to that terminal from a respective one of the controller terminals and which responds to receipt of each control word by selecting the particular predetermined time period according to the identity of the controller terminal and resets the time reference unit accordingly, whereby the time reference units at all the terminals are always synchronized to the same values irrespective of the signal propagation time between the active controller terminal and each other terminal, and by circuitry at each terminal which is responsive to the subsequent time signal emitted by its time reference unit for determining when the terminal should initiate a transmission of data, whereby the timing of such transmissions of data is unaffected by change-over from one active controller terminal to another active controller terminal.

An important subsidiary feature of the system to be described is that control for the system is not located only at one specific point but can be distributed throughout the system in a prearranged order of priority. If one controller's contact with a particular terminal is lost, another terminal can assume control so long as it is in communication with the first terminal, and the system continues to operate without loss of data.

In the particular data transmission scheme to be specifically described, which uses a data bus embodying the invention, the data is transmitted in a format wherein a series of continuous time frames of predetermined length are generated by the designated controller terminal. Each time frame is defined by a control word which is put out by the controller terminal in accordance with the count on a counter at the controller terminal. Each terminal in the system includes a similar clock which is synchronized with the clock at the controller terminal by adding counts thereto at the time the control word is generated in accordance with the bit propagation distance from the control terminal. During a given time frame, one or more of the terminals in the system will transmit data, with the time at which such data is initiated being determined by the counters of the transmitting terminals.

As pointed out previously, a special feature of the system is the fact that the controller terminal does not necessarily have to act as the controller terminal for the system, and, in fact, control is distributed throughout the system on a selective actuation basis as needed. Thus, if the primary controller terminal is disabled for any reason, or, if part of the system is cut off from the primary controller, a secondary controller (or a tertiary controller, etc.) can assume the job of transmitting the control words to define the time frames so that all of the various transmitting terminals and receiving terminals to which the data bus is connected can transmit and receive messages at the proper times with no overlapping data on the line. This selective actuation of various potential controller terminals to keep the entire bus or parts thereof functioning is accomplished automatically by the circuitry so that no data will be lost during continuous transmission.

The bus system also has the advantage that it is readily expandable or contractable. Furthermore, programming changes in one of the transmitter/receiver links of the system are readily accomplished by changing the control units only at the transmitters and receivers involved without affecting the remainder of the system.

Data bus systems embodying the invention will now be described, by way of example only, with reference to the accompanying drawings in which:

Figure 1 is a schematic illustration of one of the systems, with four terminals;

Figure 2 is a schematic illustration of one channel of the data bus of Figure 1 illustrating the condition wherein a full duplex operation of the bus system is in operation;

Figure 3 is a diagrammatic illustration of one of the systems, with six terminals, showing the survivability of various portions of the system when the data bus is broken at several points;

Figure 4 is an expanded schematic diagram of the data bus of Figure 1 illustrating in block form the circuit components at the terminal points;

Figure 5 is a schematic block diagram illustration of the terminal logic unit circuitry at each of the terminals;

Figure 6 is a schematic illustration of the terminal logic unit circuitry of Figure 5 illustrating the data flow when the terminal is in the relay mode with the data being shown in solid lines and with the control signals being shown in dashed lines;

Figure 7 is a schematic diagram similar to Figure 6, but showing the terminal logic unit circuitry data flow and control signals generated when the terminal is transmitting, or in its access mode;

Figure 8 is a schematic diagram similar to Figures 6 and 7, but illustrating the terminal logic unit circuitry data flow and control signals generated when the terminal is in its active control mode;

Figure 9 is a timing chart illustrating an example of a data transmission format which can be used with the data bus systems being described;

Figures 10 and 10A comprise a schematic diagram of the circuitry for one of the information identification decoders and demultiplexers of the terminal logic unit circuitry;

Figure 11 is a schematic diagram of the circuitry for one of the terminal traffic controllers of the terminal logic unit circuitry;

Figure 12 is a schematic diagram of the circuitry for the last source register and the channel selector of the terminal logic unit circuitry; and

Figure 13 is a schematic diagram of the terminal traffic control selector and system traffic control logic circuit and a portion of the transmitting multiplexer and priority encoder circuit of the terminal logic unit circuitry.

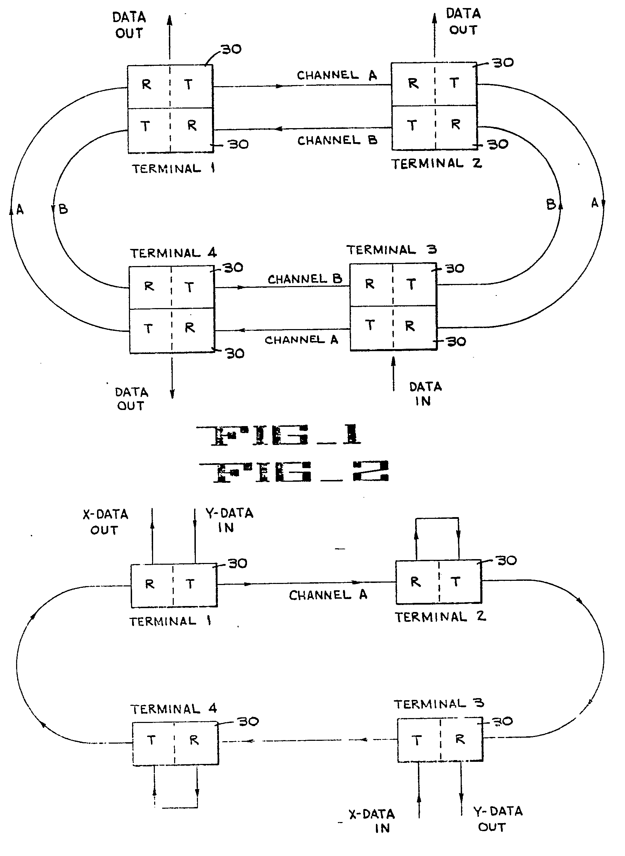

The basic configuration of the data bus system is illustrated in Figure 1 of the drawings. For simplicity's sake, only four terminals are illustrated with such terminals being connected by the bus in a closed loop configuration. However, it is within the scope of the present invention to accommodate a considerably greater number of terminals each of which is capable of both transmitting and receiving data and which may be readily added to or subtracted from the loop as desired.

As shown in Figure 1, each terminal comprises two transmitter/receiver (T/R) modules 30 which are mounted back to back and which serve to transmit and receive data on one of two lines (identified as channel A and channel B) with the lines transmitting data in opposite directions around the loop. Each of the transmitter/receiver modules acts as a receiver for data carried down the associated channel on the bus and as a retransmitter of such data to the next adjacent terminal during the normal relay mode of the module. However, when the particular terminal is transmitting, i.e., in its access mode, the T/R modules break both channels so that the received data terminates at such terminal, and new data is transmitted therefrom, such data coming from a source connected directly to the terminal (not illustrated in Figure 1). The particular construction and circuitry of the T/R modules used in the system of the present invention is shown in prior United States Patent 4,038,494 to George W. Miller et al., the disclosure of which Patent is specifically incorporated herein by reference.

It will be seen that by providing two transmitter/receiver modules 30 at each terminal, each terminal receives and transmits around the loop in two opposite directions. Thus, one of the modules is used to transmit in one direction on the indicated channel A while the complementary module is used to transmit data in the opposite direction on the complementary channel B. This particular configuration provides complementary redundancy for the system wherein not only is a redundant circuit provided (a necessary safeguard in most modern communication systems), but the transmission paths of the two circuits are complementary to each other so that if a break occurs between any two terminals no loss of data transmission from or reception by any of the terminals in the system will occur.

The method of transmitting data in the system to be described is by a serial digital format as disclosed in the aforementioned United States Patent 4,038,494, and a synchronous time-shared system is provided wherein time division multiplexing is used to provide access for the various broadcasting, or transmitting, terminals to the bus. Thus, one of the terminals, for example Terminal 1, is normally designated as the primary controller terminal whose function it will be to broadcast so-called control words at regular predetermined time intervals which control words initiate and define specific time frames for the transmission of data between the various terminals connected to the bus. With each of the time frames, one or more of the terminals is assigned a particular time slot to transmit data. All of the terminals are synchronized with the controller terminal by the method to be described. Synchronization is necessary because the bus system is designed to operate at very high data transmission rates, e.g. 10 megahertz, wherein the distances between the terminals create significant bit propagation times which must be accounted for. As will be described in greater detail hereinafter, each of the terminals on the bus is provided with a clock which is synchronized with the clock at the designated controller terminal so that all of the terminals operate in synchronism. Furthermore, and as will also be explained in greater detail hereinafter, no one single terminal need continuously act as the designated controller terminal. Indeed, the circuitry being described is arranged so that any one of two terminals can act as the controller terminal. In this way, even if the primary controller terminal malfunctions, or is disabled, another terminal will take over as a secondary controller terminal so that the terminals still in operation will be able to continue operating and providing synchronized communication from and to any terminals which are still connected to the bus.

The normal transmission method is to have various terminals transmitting messages at different prearranged times within a single time frame. Also, the time frames can be separately identified by the initiating control word so that different terminals transmit in different sequences during different time frames. Figure 9 illustrates a type of transmission format which can be used with the systems being described. The types of transmitting patterns are respectively identified as control words, preamble, text (2 types), and signature. The length of each pattern is depicted by its bit length with the number of bits in each portion of the pattern being given in Figure 9. Thus, the control word, which initiates each time, includes a 5-bit framing signal, a 2-bit identification (ID) signal which defines the type of pattern (i.e., control word), a 2-bit signal identifying the controller terminal which is initiating the control word, a 3-bit signal identifying the time frame (wherein different time frames require different terminal transmission sequences), and a 4-bit parity signal. The framing signal comprises a unique 3-bit synchronizing signal (defined in the aforementioned U.S. Patent 4,038,494) preceded by two binary zeros, or "dead bits", to prevent the overlapping of data from a previous transmission. It will be noted that the 5-bit framing signal is a unique code which precedes each transmission pattern and is inserted by the initiating terminal to assure proper alignment of the clock to the data as it is transmitted by the T/R module 30.

Following the generation of the control word, one or more terminals will transmit data during a time frame with each such transmission being initiated by a 13-bit preamble pattern which is generated by the transmitting terminal. The timing of the preamble generation is controlled by the synchronized counter at the terminal with a particular count on such counter initiating the transmission sequence. The preamble includes the framing signal, the identification (ID) signal which identifies the preamble pattern, a 2-bit terminal status (TS) signal which indicates which channels are active and transmitting, a 3-bit signal identifying the source of the broadcast (i.e., the transmitting terminal), and a parity bit.

At the conclusion of the preamble the broadcasting terminal transmits one or more text words which include the relevant data message. The fist text word is preceded by a pattern, as illustrated, which includes a framing signal, the identification (ID) signal identifying the pattern as text, an "N" bit which is a "]" for a single text word message and for the first text word of a multi-word message and which is "0" for the second and following text words of a multi-word message, a 6-bit code identifying the terminal or terminals and the terminal port or ports which are to receive the message, and a parity bit followed by the message. The first bit of the message is known as the lead bit and is always a "1" in the transmission format described. The following words in a multi-word text (with the same source and sink) are defined by only an 8-bit signal including the framing signal, the ID signal, and an "N" bit of "0" followed by the data or message.

When a terminal has completed its transmission, it signs off with a 7-bit signature pattern including the framing signal and the ID signal which notifies all terminals that the message is completed and which can be used in the logic circuitry at the user terminals for resetting their circuits for the next transmission sequence.

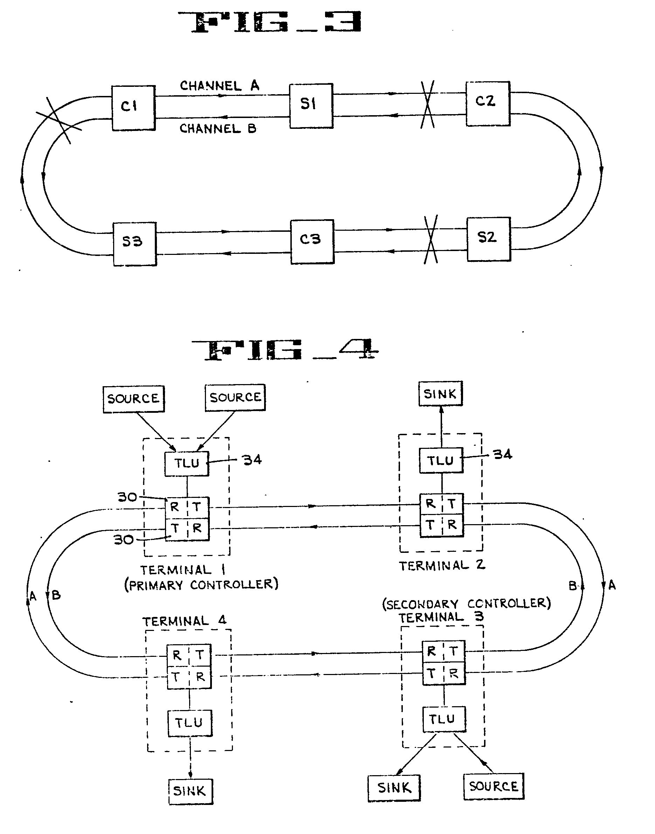

A special .transmitting arrangement is disclosed in Figure 2 wherein two terminals, terminal 1 and terminal 3, may transmit to each other at the same time in what is known as a full duplex operation. Thus, the channel A transmitter/receiver module 30 at terminal 1 transmits in one direction to terminal 3 while terminal 3 is at the same time transmitting in the same direction to the receiving portion of the module at terminal 1. Figure 2 shows only the channel A communication loop it being recognized that the complementary T/R modules at terminals 1 and 3 will be simultaneously transmitting in the opposite direction on channel B. As shown in Figure 2, when terminals 1 and 3 are in direct communication, terminals 2 and 4 are merely acting as "repeaters". i.e., they are only functioning to receive and retransmit the data along the bus. With respect to the transmission formation of Figure 9 previously described, it will be recognized that both terminals 1 and 3 will be programmed to initiate preambles at the same time each of which will only be received by one-half of the loop and will therefore not interfere with one another.

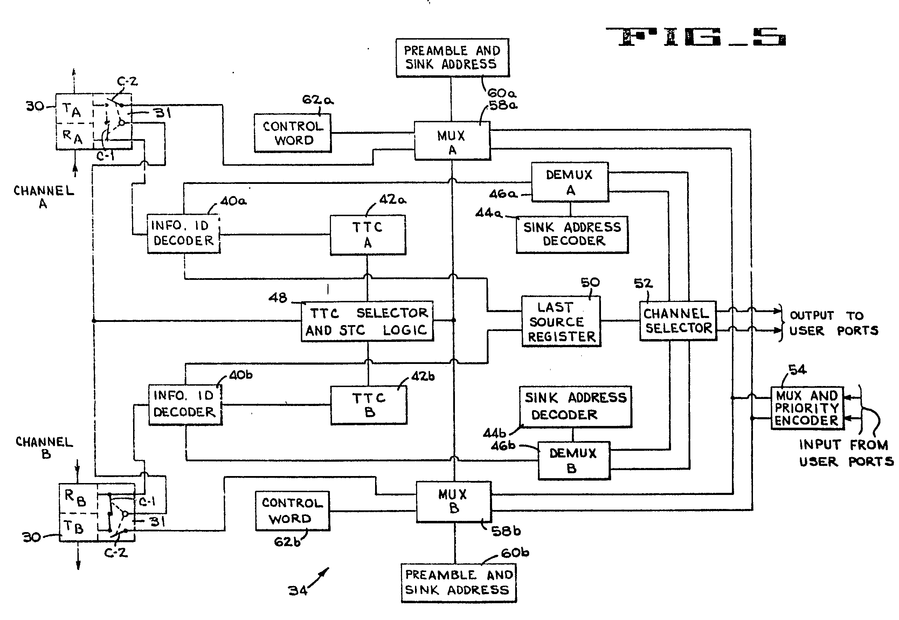

The autonomy feature of the system is illustrated in Figure 3 where an expanded loop configuration is shown comprising six terminals. The terminals have been given the letter designations C or S depending upon whether such terminals are potential controller terminals (C1, C2, C3) or secondary terminals (S1, S2, S3) having no potential controlling function. Thus, the controller terminals all must be capable of generating control words to accept control of the entire loop whereas the secondary terminals have no such controlling capability. While all of the terminals could potentially be controllers, it will be obvious that there is no point in providing for control capability in any more than every other terminal since each control terminal must have at least one other terminal to control.

To illustrate the survivability of the data bus loop of Figure 3, an intact loop will first be assumed with terminal C1 acting as the primary controller by periodically providing control words in the data train to which all of the other terminals are synchronized through their counters. If first there is a break (in both channels) between C1 and S2, C1 will remain in control even though transmission will only be received on channel A therefrom. If subsequently however, a break occurs between S1 and C2 as shown, controller C1 will continue to control terminal S1 but this link will now be isolated from the remainder of the loop. Secondary controller C2 will take over the control for terminals S2, C3 and S3 so that these four terminals will continue to function as before but with a new terminals providing the periodic control words. Since a new controller is in command, the counters at terminals S2, C3 and S3 will be resynchronized with the C2 counter. If subsequently a break occurs between S2 and C3 as shown, controller C2 will continue its control of terminal S2, but controller C3 will assume control of terminal S3. Thus, there will be left three entirely separate and independent data links each containing two terminals which will continue to operate in the same data format although each terminal will be capable of full communication only with one other terminal. This contrasts with the normal single controller bus system where a failure at the controller terminal disables the entire system and prevents further communication anywhere on the bus.

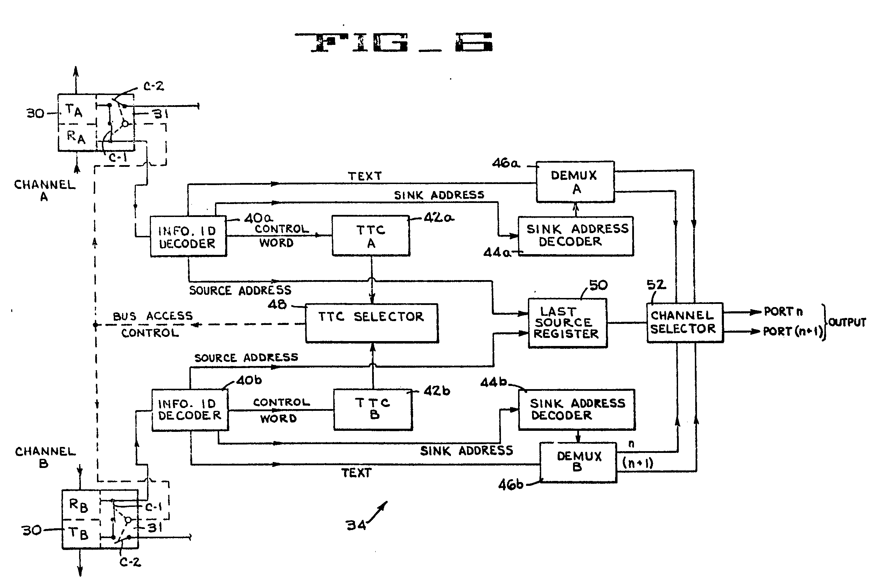

A more detailed illustration of the components of the various terminals is shown in Figure 4 of the drawings. The operation of both of the transmitter/receiver modules 30 at each terminal will be seen to be controlled by a terminal logic unit (TLU) circuit 34 which interfaces with the various sources and sinks, i.e., data providers and users respectively, at the various terminals. The sinks and sources may vary in number and kind at any terminal, and they may be readily changed with a mere change in the programming logic for the particular terminal without affecting the overall control arrangement for the entire bus system. In the arrangement to be described, each terminal will have four user ports for the data sinks and sources.

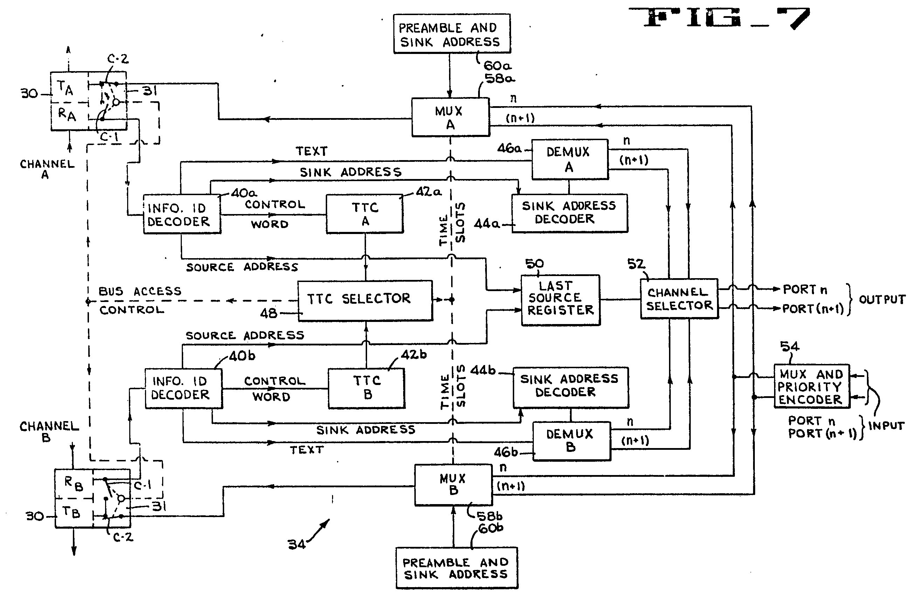

The particular circuitry of the terminal logic unit circuit 34 is shown in functional block diagram form in Figure 5. It will be noted that a plural path switch 31 is provided in each of the transmitter-receiver modules 30 at a terminal whereby the module operates in one of two conditions. In the normal operating mode as shown in Figure 5, the contacts C-1 are closed and the contacts C-2 are open so that all data received by a T/R module is directed to the transmitting portion of the module for retransmission down the bus to the next terminal in the manner set forth in the aforementioned U.S. Patent 4,038,494. The data, however, is also monitored by the terminal logic unit 34 of the terminal where it is decoded and demultiplexed to the various users, i.e., sinks, at the terminal if they are to receive the data and if they have indicated to the TLU that they are ready to receive such data. In the alternate operating mode, the contacts C-2 are closed and the contacts C-1 are open so that the link between the transmitting and receiving portions of the T/R module is broken. In this mode the terminal is in its transmitting mode, and all data terminates at the terminal. Fresh data generated in a source connected to a user port of the terminal and properly addressed and coded by the TLU, is transmitted on both channel A and channel B by the terminal, such data travelling around the loop in opposite directions until it terminates back at the transmitting T/R module. Of course, the function of the switches 31 is performed by logic circuitry in the actual T/R circuits due to the high switching rates required, the relay type switches being shown in the block diagram illustration of Figure 5 only for the purpose of a ready explanation of the function accomplished thereby.

The terminal logic unit circuit 34 provides all of the logic functions required by the terminal including multiplexing and demultiplexing, addressing and formatting all data, traffic control and interfacing. As previously explained, each terminal both transmits and receives on both a channel A and a complementary channel B. When a terminal is acting in its transmitting, or access mode, data is transmitted simultaneously on both channels. When a terminal is in either its access mode or its relay mode, however, data may be outputted to the users from that channel which arrives first while the data on the alternate channel is suppressed by the TLU circuitry 34. This ensures that the received data at each terminal will be as fresh as possible. It also provides automatic switchover in the case of channel failure without requiring that the failure be detected.

As seen in Figure 5, the TLU circuit 34 is associated with each terminal includes for each channel an information identification decoder circuit 40a, 40b which decodes and routes the incoming data, a demultiplexer circuit 46a, 46b, a sink address recoder 44a, 44b, and a terminal traffic controller (TTC) circuit 42a, 42b which determines the terminal operating mode and defines the time slots for the transmitters connected to the terminal and which includes the aforementioned counter which keeps the system in synchronism. Each channel also includes, for transmission, a circuit 60a, 60b for providing the preamble and sink address, a circuit 62a, 62b for probiding the control word (if the terminal is acting as the controller terminal), and a multiplexer circuit 58a, 58b. In addition, each TLU includes a TTC selector and system traffic control (STC) logic circuit 43 which receives inputs from the TTC circuits from both channels, a last source register 50 and channel selector circuit 52 which determines the channel which will transmit the data to the user ports. A multiplexer and priority encoder circuit 54 is utilized during the terminal transmitting operation to control transmission from the sources connected to the terminal.

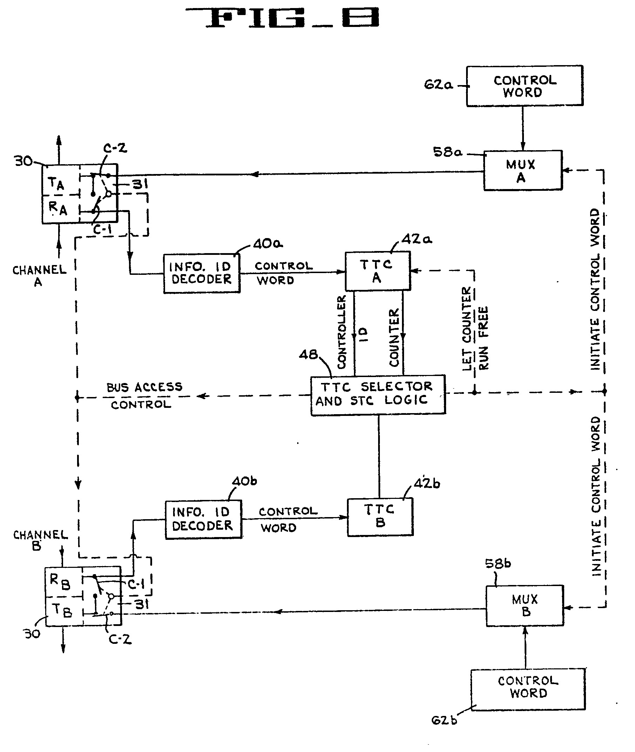

The three operating modes of each terminal will now be described in detail. The first operating mode is the relay mode wherein the terminal receives and retransmits data. This mode is shown in Figure 6 with only the necessary portions of the TLU circuitry 34 being illustrated and with the data flow paths being shown with arrows in full lines and with the control signals being indicated by dashed lines. As previously explained, during the relay mode of operation a terminal serves only as a repeated station to relay data along the bus; however, during such operation, it continuously receives all data on the bus and may output properly addressed portions of such data to a sink connected to one of the terminal ports. It does not have access to the bus however and cannot introduce data to the bus while in this operating mode. In the example given for the data format to be used with the bus system being described, all data is referenced by a special information identification code which identifies the data as either a control word, a preamble, text or a signature. This information I.D. is decoded in decoder circuits 40a, 40b (one for each channel) which then serve to route the data to the appropriate location. Each decoder 40a, 40b sends the control word to the terminal traffic controller circuit 42a or 42b which decodes the identity code of the active controlling terminal and adjusts the counter container therein so that it will be in synchronism with the identical counter in the TTC circuit of such controller terminal. This is necessary since the various terminals on the bus may be located at distances wherein propagation time of the data along the bus at high data rates will result in delays of several bits. Thus, each counter at each terminal includes a switch array for presetting the counter with a number based on the location of the active controller relative to the receiving terminal. Upon the reception of the control word and the identification of the controller terminal by the TTC circuit, the appropriate number will be input to the counter so that, at that instant, the counter at the terminal and the controller terminal counter will be in exact synchronism, i.e., they will have the same count appearing therein. The two TTC circuits 42a and 42b will, in general, receive the transmitted control words at different times; however, the bit count on their counters will be in agreement since the preset inputs to the counters will vary in accordance with the different transmission paths from the controller terminal.

Only one TTC circuit 42a or 42b will control the operating mode of each terminal, with the selection being made by a TTC selector circuit 48 which will provide a control signal to the T/R modules 30 in order to maintain the modules in their relay mode.

When a data "message" is received by a terminal, the information I.D. decoders 40a, 40b also extract the source address from the preamble and deliver it to the last source register circuit 50 where it is stored to be used in determining which of the two channels will be outputted to the user sink. The channel selector circuit 52 then makes such determination and acts as a multiplexer to route data from one of the channels to the appropriate output port where the user sink is located. Since the data is being provided through the demultiplexers 46a, 46b to the channel selector circuit, the channel selector circuit will normally output the first data received. However, when a new transmitting terminal comes on the line, data may be received first from the opposite channel. In order to distinguish between this condition and the normal condition wherein the second channel's data is merely redundant data received after that from the first channel, the last source register is used to note a new transmitting source so as to condition the channel selector circuit to watch for new data.

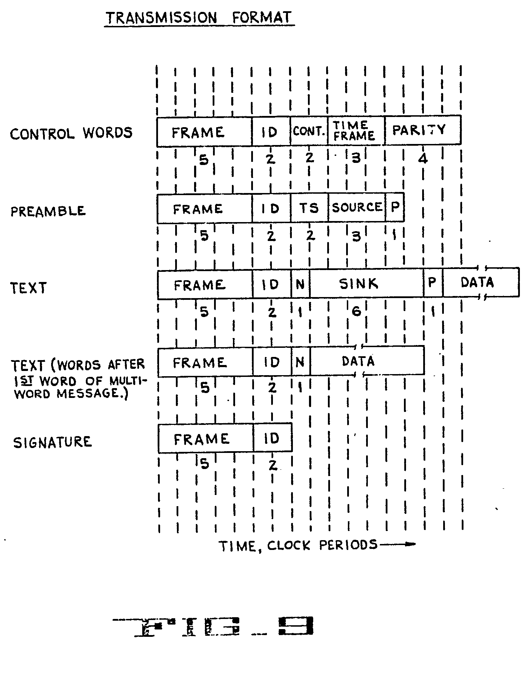

When the TLU circuitry 34 is in the access (transmitting) mode, the conditions are as shown in Figure 7 of the drawings. This mode will occur when each TTC circuit 42a and 42b determines that the time frame number and bit count in the counter correspond to a programmed time slot in the TTC's PROM. This activates a TTC selector circuit 48 to provide a bus access control signal which operates to reverse the contacts C-1, C-2 in the T/R modules 30 to break the loop at the terminal and allow direct access to the loop from the input ports at the terminal. At the same time, time slot control signals are sent to the multiplexer circuits 58a, 58b to condition these circuits for data transmission. It will be noted, however, that while the terminal is in its access mode it continues to receive and process data exactly as in the previously described relay mode; thus, it is possible for a source to send data to a sink located at the same terminal. This condition also permits the previously described full duplex communication between a pair of terminals. The new data from the user ports at the terminal is delivered at the proper time through the multiplexer and priority encoder circuit 54 which transmits the data simultaneously to both channels A and B through the multiplexer circuits 58a, 58b. The appropriate preamble and sink address is added to the data from the user by circuits 60a and 60b, and the data is delivered to the bus for transmission by the T/R module 30. When the data transfer sequence is complete and all sources at the terminal have been serviced, the multiplexer circuits attach signatures to the data. At the end of the entire time slot for transmission, the bus access control signal will hold open both channels A and B for a preprogrammed additional length of time to insure that the entire transmission for ther terminal is removed from the loop.

In order to permit a terminal to operate in the transmitting mode, the control words must be received from the controller terminal. If control words are not received for a given number of time frames (during which time subordinate controller terminals can assume control of the bus), the TTC selector circuit 48 will remove the bus access control signal so that the terminal cannot transmit. The terminal will continue to function in the relay mode, however, even though it is not receiving control words from an active controller. If a TTC circuit 42a or 42b then receives control words for two time frames, the TTC selector circuit will again switch the T/R modules to the transmit mode.

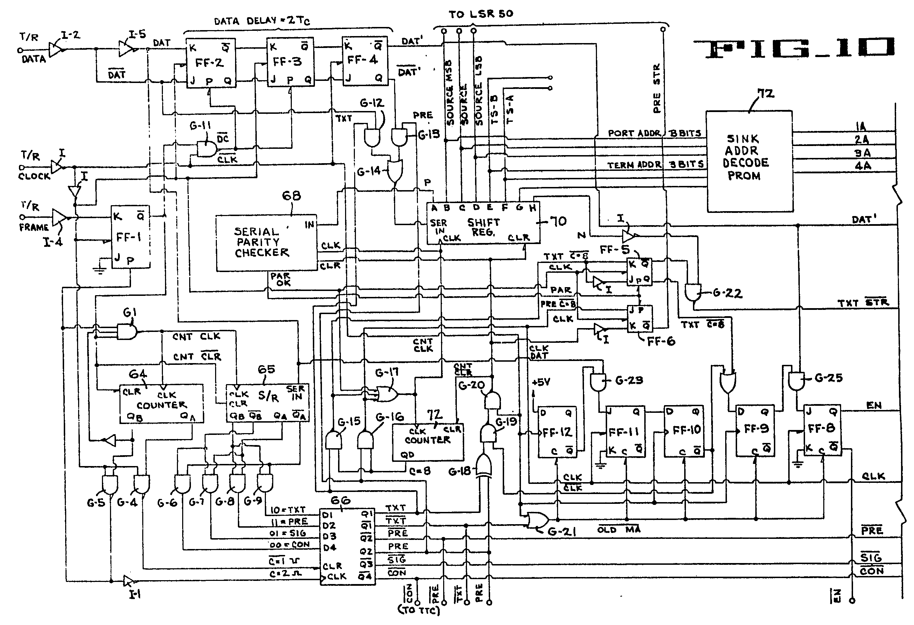

Finally, the terminal may be in the active control mode as shown in Figure 8 even when it is simultaneously acting in the relay mode or in both the relay and transmitting modes previously described. In the active control mode, system traffic controller (STC) logic assumes control of the TTC selector circuit 48. This circuit selects one of the TTC circuits (normally TTC 42a) to control the entire system with the counter in such circuit running free during this mode of operation while all of the counters in the other TTC circuits throughout the system are synchronized to it. During the time that the terminal is in control of the system, control words are generated in circuits 62, 62b. These are delivered to the multiplexers 58a, 58b so that the control words are transmitted on both channels. The TTC selector circuit also provides the bus access control signal to the T/R modules during this time. Also, while in the active control mode, the decoder circuits 40a, 40b will monitor the controller identification code that is received. Normally they would receive their own identification code as the control word traverses completely around the loop. If, however, at any time they receive the identification of a different controller, the TTC circuits will immediately relinquish control. Further logic circuitry is provided among all of the potential controller terminals so that each will assume control of the system after failure to receive control words for a predetermined number of time frames. For example, the primary controller will take over after failing to receive a control word for two time frames; the secondary controller will assume control after four time frames with no control words; the tertiary controller will assume control after six time frames with no control words, etc. In this way, control of the system by two controllers at the same time is prevented while each potential controller will have a chance to assume control of the system if required. It will be noted that since the system is synchronous, data errors would not normally be expected to show up within several time frames after loss of control since the counters in the TTC circuits at the various terminals should stay in synchronism for at least such amount of time.

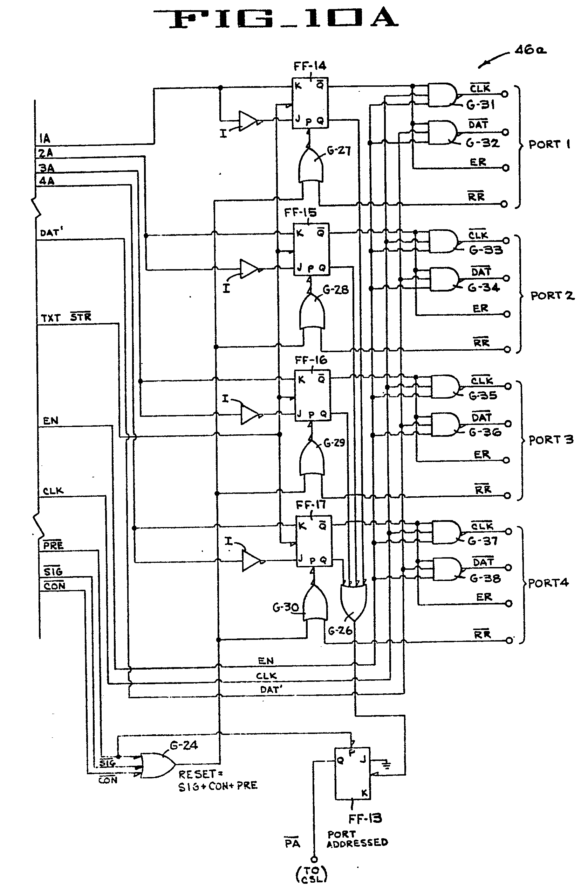

The specific circuity for the TUL's 34 are shown in Figures 10 to 13 using American National Standard symbols (ANSI 32.14-1973) with polarity indicator symbols as indicated in paragraph 2.2 thereof. A bar over an output or input signal indicates that the indicated signal is low while the absence of a bar indicates that the indicated signal is high.

The specific circuitry for the information ID decoder circuit 40a is shown in Figure 10, it being recognized that the identical circuit 40b is provided for channel B of the terminal. The synchronizing, or framing, signal, the clock signal and the data are delivered from the associated T/R module 30 as described in the aforementioned U.S. Patent 4,038,494. The synchronizing signal is delivered through inverter I-4 to flip-flop FF-1 to enable gate G-1 and provide clocking pulses to a counter circuit 64. Counter 64 counts up to two to allow the 2-bit ID code to be entered into shift register 65 through inverters I-2 and I-5. Gates G-5 and G-4 are connected to the outputs of the counter 64 to indicate when the bit count is 1 and 2 respectively. At the bit count of 1, a latch 66 is cleared through gate G-4 while at the count of 2 the latch is clocked through inverter I-1. At the input to the latch 66 are four inputs signals from gates G-6, G-7, G-8 and G-9 which decode the output of the shift register 65 to indicate which data format is being received, i.e., control word, preamble, text or signature.

When the flip-flop FF-1 is cleared after the first two data bits, gate G-11 is disabled to remove the preset signal from flip-flops FF-2 and FF-3. The ensuring data which passes through inverters I-2 and I-5 is then successively clocked through flip-flops FF-2, FF-3 and FF-4 which results in a time delay of two clock periods. It will be noted that the complement of the data, which has only passed through the inverter I-2, will be directed to a gate G-12 without passing through FF-2 so that it is not delayed. The output of flip-flop FF-4 is directed to an AND gate G-13. The signal indicating that a preamble is being received from latch 66 is anded with the delay data to enable gate G-13 while the signal from latch 66 indicating that a text word is being received is anded with the non-delayed data in gate G-12. The outputs of both gates G-12 and G-13 are directed through NOR gate G-13 to an 8-bit shift register 70. Referring back to Figure 9, it will be noted that the format for the preamble includes only 6 bits after the ID code while the text words include 8 bits after the ID code. Thus, the 2-bit delay provided by flip-flops FF-2, FF-3 and FF-4 for the preamble data permits both data patterns to fill the register 70 from the left end thereof with the parity bit (the last bit of the pattern) being in the initial bit position in the register. The shift register 70 is clocked with a counter 72 which counts 8 clock periods. When either a text word or a preamble word creates an output signal from latch 66, exclusive OR rate G-18 and NAND gates G-19 and G-20 remove the clear signal from the counter 72 and initiate the counting. After the counter has counted to 8 (to allow the shift register 70 to be loaded in the manner afore-described), an output signal from the counter to gates G-15 and G-16 disables gate G-17 to simultaneously remove the clock pulses from the counter and the shift register 70.

At this time, the parity bit will be in the first position in the shift register 70, as explained hereinbefore, and a parity checking circuit 68 will, if the parity is good, enable a pair of flip-flops FF-5 and FF-6. The output of flip-flop FF-5 provides the text strobe signal signal (TXT STR) through gate G-22 to the demultiplexer circuitry 46a (Fig. 10A). The complementary flip-flop FF-6 provides the preamble strobe signal PRE STR), when a preamble word is present, which signal is directed to the last source register 50 in the TLU circuitry.

Until the next framing signal, the shift register 70 will thus contain the preamble or text word code. If it is a preamble word, the 2-bit terminal status code and the 3-bit source code are taken directly out of the register with the latter code being directed to the last source register for a purpose to be explained presently. If, on the other hand, a text word is in the shift register 70, a 6-bit sink address code is directed to PROM 72 which functions as the sink address decoder raising a signal on one or more of the addressed port lines (1A—4A) which signals are directed to the demultiplexer 46a.

The PROM 72 will not, however, receive signals if the text word is a word after the first word of a multi-word message wherein the N bit will be a "zero". In that case, the sink addresses will remain the same and there will be no need to readdress the demultiplexer circuit 46a. When the text signal from latch 66 enables gate G-21, flip-flops FF-8 through FF-12 are enabled by removing the clearing signals therefrom. On the first clock period after the text word has been detected, the N bit will be directed to gate G-23. If the N bit is a "zero", flip-flop FF-11 does not get set and flip-flop FF-10 will not be toggled, leaving the shift register 70 and counter 72 to operate in the manner aforedescribed. If, however, the N bit is a "1", gate G-23 is enabled to successively enable flip-flops FF-11 and FF-10 which provides an output signal to gate G-19 which will clear the counter 72 and the shift register 70 and prevent the text word from being shifted into the shift register 70. This will occur, of course, on words after the first word of a multi-word message where there is no need to readdress the date.

The delayed data is directed to a gate G-25 which is provided with an enabling signal from flip-flop FF-9 at the time when the lead bit of the data occurs at the gate. This provides an enable ($\overline{EN}$) signal to the channel selector circuit as shown and also provides an enabling signal (EN') for each of the ports in the demultiplexer circuit 46a.

If one of the ports in the demultiplexer circuit 46a is to receive a message during the subsequent data transmission, gate G-26 (Fig. 10A) and flip-flop FF-13 provide an output signal ($\overline{PA}$) to the channel selector circuit 52.

The demultiplexer circuit 46a is shown in Figure 10A and will be seen to include NAND gates G-31 through G-38 which provide the clock and data signals (as indicated) for each of the four ports connected to the terminal. These ports are selected from the sink address decoder circuit 72 (Fig. 10) through flip-flops FF-44 through FF-17 (Fig. 10A). If a port has been addressed it must also be ready to receive data before data will be transmitted thereto; thus, NOR gates G-27 through G-30 act to lock out the flip-flops FF-14 through FF-17 if the proper request to receive signal ($\overline{RR}$) is not received from the connected user port, or, if a signature, control word or preamble is detected so as to enable gate G-24.

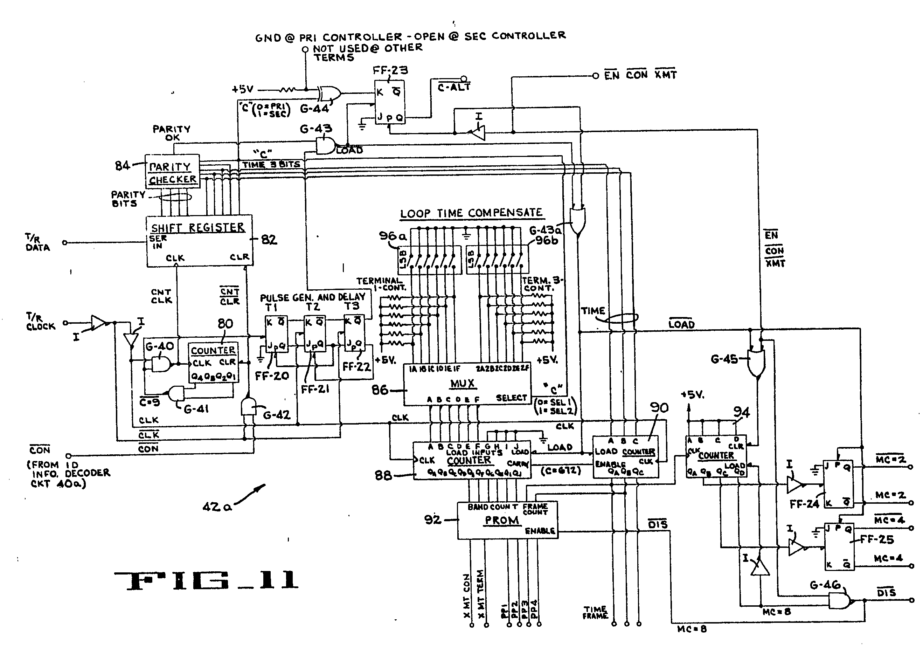

Specific circuitry for the terminal traffic controller 42a is shown in Figure 11, and it will be appreciated that circuitry 42b will be identical thereto. As hereinbefore indicated, the terminal traffic controller performs the function of monitoring the control words received by the associated T/R module 30 at the terminal to keep the terminal in synchronism with the system controller and to initiate transmission from the terminal at the appropriate time. At the end of the initial framing signal and ID code of a control word, a control word signal ($\overline{CON}$) is raised by the latch 66 in the information ID decoder circuit 40a as previously pointed out, and such control signal will disable gate G-42 (Fig. 11) and remove the clearing signal from a counter 80 and a shift register 82. The counter 80 is connected to the associated T/R clock and is thus activated to count to 9 to allow the last 9 bits of the control word (controller code, time frame code and parity bits) to be shifted into the also activated shift register 82. At the count of 9, the gate G-41 is enabled to disable gate G-40 and remove the clock signal from counter 80 and shift register 82 to thereby disable these circuits. The four parity bits of the control word are then looked at by the parity checking circuit 84, which is a conventional Hamming code 4-bit parity checking circuit, and circuit 84 provides an enabling signal to gate G-43 is the parity is good. Flip-flops FF-20, FF-21 and FF-22 are connected in series to the output of the counter 80 through gate G-41 and serve to create a 1-1/2 clock period delay following the shifting of the control word into shift register 82 in order to allow time for the parity checking circuitry 84 to perform its operation. The output of such delay circuit from flip-flop FF-22 and the parity signal cause gate G-43 to provide a load signal ($\overline{LOAD}$) to counters 88 and 90. The counter 88 is the counter previously referred to which is associated with each TTC circuit and which counts from 0 to 671 (672 counts) between control words and thereby defines the time frames for the data transmission. Since not all time frames need have similar terminal transmitting formats, the counter 90 is used to count the time frames in a full transmission sequence. In the present example, the counter 90 is set to count to four before being recycled, i.e., there will be four distinct time frames within one complete transmission.

As explained previously, since a given terminal may be located at a distance from the controller terminal so that several clock periods pass before the control word generated at the controller terminal is received by the TTC circuit 42a as shown in Figure 11, the counter 88 will be automatically loaded with a count equivalent to that delay when the control word is received. Since there are only two potential controller terminals (1 and 3) in the present example, this count is provided by one of two presettable switch arrays 96a or 96b with array 96a defining the propagation delay from the primary controller (terminal 1) while array 96b defines the propagation delay from the secondary controller (terminal 3). Upon the reception of the load signal from the gate G-43 through gate G-43a, the counter 88 thus starts to count from the number which is loaded in from the appropriate switch array 96a or 96b through the multiplexer circuit 86 with the selection being made by the decoded control code bit from the shift register 82 as shown.

The three-bit time frame code in the register 82 is loaded into the counter 90 upon the reception of the load ($\overline{LOAD}$) signal. Thus the time frame counter 90 is also kept in synchronization with the system controller with each received control word.

The count in counter 88 will be continuously monitored by the preprogrammed PROM 92 which will also monitor the frame count from counter 90. If the terminal with which TTC circuit 42 is associated is to transmit at a particular band count (i.e., a particular subdivision defining a time slot) within a particular time frame, an output signal is provided on the transmit terminal line (XTM TERM) and signals are provided on the "poll port" lines (PP1

through PP4) to determine whether or not the particular user source is ready to transmit data. If the terminal with which the TTC circuit of Figure 11 is associated is a controller terminal, either primary or secondary, a signal will also be provided on the transmitter control line (XMT CON) from PROM 92 when it is time to broadcast the control words to initiate a new time frame.

It will be noted that the frame counter 90 is also connected to the clock input of another counter 94. The counter 94 is capable of counting to 8 with the count of 2 providing an output signal through flip-flop FF-24 (MC = 2), the count of 4 providing an output signal through flip-flop FF-25 (MC = 4), and the count of 8 providing a disable signal ($\overline{DIS}$) through gate G-36. The counter 94 is normally cleared out by a clearing signal from gate G-45 which will be enabled each time a $\overline{LOAD}$ pulse (i.e., a control word) occurs, or if the associated TTC circuit is controlling the bus. If neither of these two conditions is occurring then, it signifies that no control words are being received from the bus, and the counter 94 will count one count for each missed control word with its input being derived from the output of the main counter 88 through counter 90. If the terminal which includes the circuitry of Figure 11 is the primary controller, then the missed count signal (MC = 2) from flip-flop FF-24 will cause the terminal to assume control of the bus after two missed control words. If the terminal is a secondary controller, then the missed count signal (MC = 4) from flip-flop FF-25 will cause the terminal to assume control of the bus after four missed control words, the signal from FF-25 occurring 2 time frames after the signal from FF-24. If no control words are received for a full 8 time frames, then gate G-46 provides a disable signal ($\overline{DIS}$) to the TTC selector circuit 48 and simultaneously disables the PROM 92 so that the TTC circuit will no longer be able to provide bus access control for the terminal.

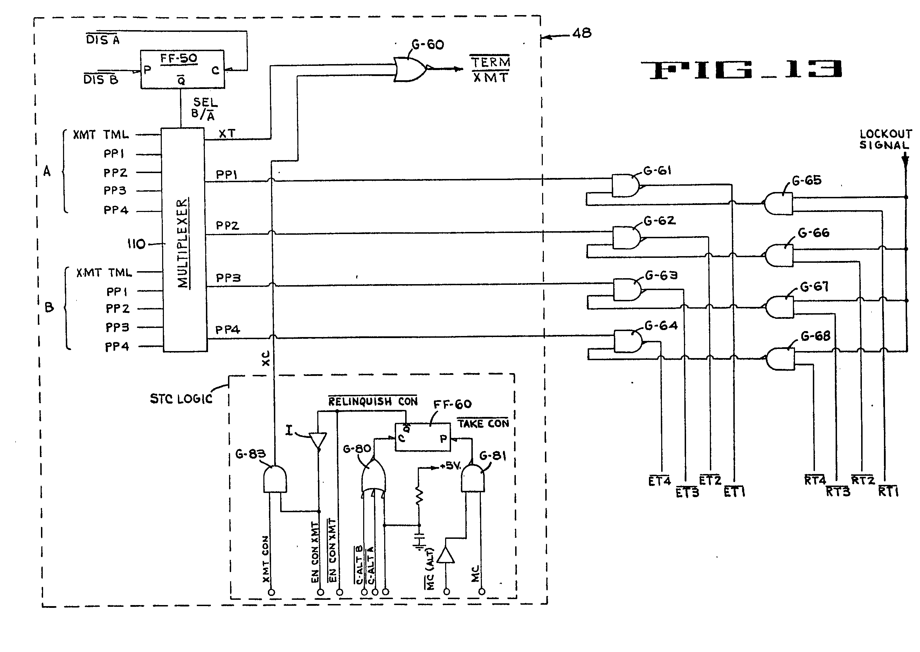

It will also be noted that the controller identification bit (the first bit of the 2-bit control code in the shift register 82) is monitored by an exclusive-OR gate G-44. If the terminal which includes the TTC circuitry of Figure 11 is in control of the bus then the signal on the enable control transmitter line ($\overline{EN\ CON\ XMT}$) is low and flop-flop FF-23 will be enabled. By setting the alternate input to the exclusive-OR gate G-44 in accordance with the indicated conditions in Figure 11, when the TTC circuitry of Figure 11 is in control of the bus, the flip-flop FF-23 will provide a low output *only* if an alternate controller is providing control words. This low output signal ($\overline{C\text{-}ALT}$) is directed to the system traffic controller (STC) circuit in circuitry 48 (Fig. 13) and acts to relinquish control from the terminal so that two controllers will not be attempting to control the bus at the same time.

It will be noted that the enable control transmitter ($\overline{EN\ CON\ XMT}$) signal also acts through gate G-43a to disable the load signals to the counters 88 and 90 when the associated terminal is in control of the system to thereby let the counters 88 and 90 run free during this time.

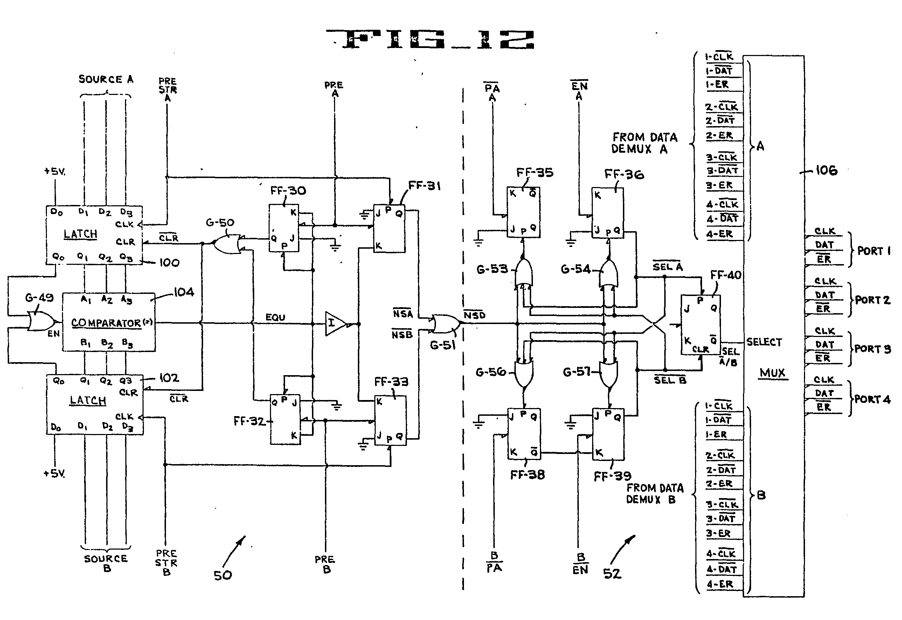

The last source register 50 and the channel selector circuit 52 are shown in Figure 12 of the drawings. In the last source register, latch circuits 100 and 102 receive the source code signals from the detected preamble word in the information ID decoders 40 and 40b, respectively. These signals are latched in by the preamble strobe (PRE STR) signals from the decoder circuits as previously described. A comparator 104 compares the outputs of the latch circuits 100 and 102 and provides a high output signal when the latch outputs are equal to each other and a low output signal when the latch outputs are not equal. Thus, assuming that the latches are cleared to start with, the output signal will be low since gate G-49 will prevent the comparator from indicating that the latch outputs are equal. The first channel (A or B) at the terminal which receives a new preamble will direct the new source code signal to the appropriate latch 100 or 102. The comparator 104 will now be enabled by gate G-49, but the output of the comparator 104 will stay low, indicating an inequality. As the preamble signal (PRE) for that channel is removed upon the reception of the framing bit for the following text word, AND gate G-51 will be enabled through flip-flop FF-31 or flip-flop FF-33 to pre-set flip-flops FF-35, FF-36, FF-38 and FF-39 through gates G-53, G-54, G-56 and G-57, respectively. The toggled flip-flop FF-31 or FF-33 is reset when the preamble strobe signal (PRE STR) is removed (it will be noted that the preamble strobe signal is removed one-half clock period after the associated preamble signal is removed). This reset removes the presetting signal from flip-flops FF-35, FF-36, FF-38, and FF-39 through the aforementioned gates. When the second channel (A or B) at the terminal provides the same preamble to the associated latch 102 or 100, respectively, the comparator 104 will detect the equality and the output therefrom will be high, enabling flip-flops FF-30 and FF-32 and disabling flip-flops FF-31 and FF-33. As the preamble signal (PRE) for that channel is removed, FF-30 or FF-32 provides a clearing signal ($\overline{CLR}$) through gate G-50 to clear latches 100 and 102. The output of the comparator 104 will go low and preset flip-flops FF-30 and FF-32 to prepare the circuit for the next preamble. The purpose of the last source register circuit is therefore to detect when a new source of data is transmitting and to permit the first channel receiving said data from that source to control the flow of such data to the user ports through the channel selector circuit 52.

When the flip-flops FF-35, FF-36, FF-38 and FF-39 in the channel selector circuit 52 are preset by the output signal from the last source register 50, indicating that a new source is transmitting, the detected lead bit signal on the enable line ($\overline{EN}$) from the channel with the data and the accompanying port addressed signal ($\overline{PA}$), indicating that one of the user ports of the terminal is to receive data, serve to clock one of the pairs of flip-flops FF-35 and FF-36 or FF-38 and FF-39. The output signals from FF-36 and FF-39 are connected to the clear and pre-set ports of a flip-flop FF-40 (as shown) so that the first signal received from either channel will provide an output select signal while at the same time inhibiting the other channel. The output signal from the flip-flop FF-40 causes the multiplexing circuit 106 to select the appropriate channel A or B from which all of the signals to the user ports are directed.

The TTC selector and STC logic circuitry 48 is shown in Figure 13 along with a portion of the demultiplexing and priority encoder circuitry 54. The terminal transmit (XMT TMC) and poll port (PP) signals from the two TTC PROMs 92 (Fig. 11) are directed to a multiplexer 110 which sends a signal to OR gate G-60 when the terminal is to transmit, the gate G-60 providing the bus access control signal which operates the switches 31 in the T/R modules 30 as previously described. The multiplexer 110 selects the inputs from either channel A or channel B in accordance with the output signal from a flip-flop FF-50. When the circuitry is activated the flip-flop FF-50 will select either channel A or channel B at random assuming that neither channel as been disabled. The multiplexer will then continue to output signals from that randomly selected channel until it is disabled whereby it will immediately switch over to the other channel. The poll port signals PP1 through PP4 are anded with signals from gates G-65 through G-68 in order to provide the enable transmit signals $\overline{ET1}$ through $\overline{ET4}$ to the user sources. The gates G-65 through G-68 are enabled from the request to transmit ($\overline{RT}$) signals from the user ports unless such signals arrive after a lock-out signal is provided which signals will occur at the end of the preamble immediately preceding the terminal transmission text words.

The STC logic circuitry is also shown in Figure 13 as forming a portion of the TTC controller circuitry 48. When the transmit control signal (XMT CON) is raised by PROM 92 in the controlling TTC circuit 40a, the terminal transmit signal ($\overline{TERM \ XMT}$) is provided through enabled gates G-83 and G-60. Control will be relinquished, as previously explained, when the controlling terminal receives control words from another terminal. Thus, gate G-80 receives the alternate controller ($\overline{C-ALT}$) signals from both channels of the terminal to clear flip-flop FF-60 and remove the enable control transmit signal. It will be noted that gate G-80 also receives a disabling input in any terminal which is not a potential controller terminal so that the enable control transmit signal can never be raised.

Finally, the control signal can be raised when the flip-flop is preset through the gate G-81. This occurs when the missed count (MC) signal is either 2 or 4 (depending on whether the terminal is a primary or secondary controller) *and* the alternate (i.e. non-controlling) channel has also missed the same counts from the time frame counters.

The remainder of the circuitry which provides the transmission portion of the TLU circuitry is essentially conventional and consists of conventional multiplexing circuitry; lead bit, control word, preamble, text and signature generating circuits; and a sink address generating circuit which can be comprised of a PROM.

### Claims

1. A data bus system, comprising a plurality of terminals (1, 2, 3 ...) interconnected in a continuous chain, a plurality of the terminals (1, 2, 3 ...) being broadcast terminals each capable of transmitting serial data onto the continuous chain during a respective time slot and removing the data therefrom after it has been transmitted around the continuous chain, each one of a plurality of the terminals (e.g. 1 or 3) being designated as being capable of acting as a controller terminal at any time to transmit a control word onto the continuous chain which control word includes a synchronizing signal which proves a time reference to the terminals (1, 2, 3 ...) by means of which they can identify their respective time slots and which control word also identifies that controller terminal, each terminal (1, 2, 3 ...) including a time reference unit (88) emitting regular time signals and a synchronizing circuit (96a, 96) which stores a plurality of predetermined time periods each being representative of the signal propagation time to that terminal from a respective one of the controller terminals and which responds to receipt of each control word by selecting the particular predetermined time period according to the identify of the controller terminal and resets the time reference unit (88) accordingly, whereby the time reference units (88) at all the terminals are always synchronized to the same values irrespective of the signal propagation time between the active controller terminal and each other terminal, and by circuitry (92) at each terminal which is responsive to the subsequent time signal emitted by its time reference unit (88) for determining when the terminal should initiate a transmission of data, whereby the timing of such transmissions of data is unaffected by changeover from one active controller terminal (e.g. 1) to another active controller terminal (e.g. 3).

2. A system according to claim 1, in which each time reference unit (88) is a respective counter (88) driven by a respective clock, and in which each said predetermined time period is a respective predetermined count, whereby the counters (88) at all the terminals (88) are always synchronized to the same count values.

3. A system according to claim 1 or 2, in which the controller terminals respectively have different and predetermined priorities, and in which each controller terminal (e.g. 1 or 3) includes a counter (94, Fig. 11) operative to count the number of control words not received by that terminal, and circuitry (e.g. FF-24 or FF-25) operative to cause that controller terminal (e.g. 1 or 3) to assume control of the system when the count of the counter (94) reaches a predetermined count which is different from each of the controller terminals (e.g. 1 or 3) and depends on their relative priorities.

4. A system according to claim 1, 2 or 3, in which the continuous chain comprises a pair of complementary closed loops, each broadcast terminal including circuitry for simultaneously transmitting data over each of said loops with the data moving from the broadcast terminal in opposite directions in each loop.

## Patentansprüche

1. Datenbussystem, bestehend aus einer Vielzahl von Stationen (1, 2, 3 ...) welche in einer geschlossenen Kette miteinander verbunden sind, wobei eine Vielzahl der Stationen (1, 2, 3 ...) Rundfunkstationen sind, welche jede in der Lage sind, Seriendaten in der geschlossenen Kette während eines entsprechenden Zeitabschnitts zu übertragen und die Daten wieder der Kette zu entnehmen, nachdem diese in der Kette übertragen worden sind, wobei jede aus der Vielzahl der Stationen (1, 3) jederzeit als Kontrollstation zum Übertragen eines Steuerwortes in der geschlossenen Kette einsetzbar ist, und das Steuerwort ein Synchronisiersignal enthält und die Zeitrefferenz für die Stationen (1, 2, 3 ...) bereitstellt, so daß diese ihre entsprechenden Zeitabschnitte identifizieren können und wobei das Steuerwort ebenfalls die Kontrollstation identifiziert, wobei jede Station (1, 2, 3 ...) eine Zeitreferenzeinrichtung (88) enthält welche Normalzeitsignale initiiert sowie einen Synchronisierkreis (96a, 96) der eine Vielzahl vorbestimmter Zeitperioden speichert, welche jede representativ ist für die Signallaufzeit zu der Station von einer entsprechenden Kontrollstation und welcher auf den Empfang jedes Steuerworts reagiert durch Auswahl der vorherbestimmten Zeitperiode entsprechend der Identität der Kontrollstation und die Zeitreferenzeinrichtung (88) entsprechend zurücksetzt, wobei die Zeitreferenzeinrichtung (88) in jeder der Stationen fortwährend zu den selben Werten synchronisiert sind, unabhängig von der Signallaufzeit zwischen der aktiven Kontrollstation und jeder anderen Station, und einem Schaltkreis (92) in jeder Station welcher auf aufeinanderfolgende Zeitsignale seiner Zeitreferenzeinrichtung (88) zum Bestimmen des Zeitpunkts zu dem die Station eine Datenübertragung auslösen soll reagiert, wobei das Takten einer solchen Übertragung von Daten unbeeinflußt ist vom Wechsel einer aktiven Kontrollstation (1) zu einer anderen aktiven Kontrollstation (3).

2. System nach Anspruch 1, in welchem jede Zeitreferenzeinrichtung (88) ein respektiver Zähler (88) ist und durch einen entsprechenden Takt getrieben wird und in welchem jede vorherbestimmte Zeitperiode eine respektive Zählung ist, wobei die Zähler (88) in allen Stationen (88) ständig zu dem selben Zählwert synchronisiert sind.

3. System nach Anspruch 1 oder 2, in welchem die Kontrollstationen unterschiedliche und vorherbestimmte Prioritäten aufweisen und in welchem jede Kontrollstation (1, 3) einen Zähler (94, Fig. 11) enthält, der die Anzahl der durch die Station nicht empfangenen Steuerworte zählt und Schaltkreise (FF-24, FF-25) welche die Kontrollstation (1, 3) dazu veranlassen, die Steuerung des Systems zu übernehmen, wenn die Zählung des Zählers (94) eine vorherbestimmte Zählung einnimmt, welche unterschiedlich für jede der Kontrollstationen (1, 3) liegt und auf ihrer relativen Priorität beruht.

4. System nach Anspruch 1, 2 oder 3, in welchem die geschlossene Kette ein Paar komplementärer geschlossener Kreise aufweist, und die Rundfunkstationen Schaltkreise enthalten zum simultanen Übertragen von Daten in jedem der Kreise, wobei die Daten von den Rundfunkstationen in entgegengesetzter Richtung durch jeden Kreis verlaufen.

## Revendications

1. Système de lignes omnibus de données. comprenant plusieurs terminaux (1, 2, 3 ...) interconnectés en une chaîne continue, plusieurs des terminaux (1, 2, 3 ...) étant des terminaux de diffusion, capables chacun d'émettre des données en série sur la chaîne continue pendant un intervalle de temps respectif et d'en supprimer les données après qu'elles ont été transmises autour de la chaîne continue, chacun desdits plusieurs terminaux (p.e. 1 ou 3) étant réalisé comme étant capable de fonctionner comme un terminal moniteur à tout moment pour émettre un mot de contrôle sur la chaîne continue, ce mot de contrôle contenant un signal de synchronisation qui fournit une référence de temps aux terminaux (1, 2, 3 ...) au moyen de laquelle ils peuvent identifier leurs intervalles de temps respectifs, et ce mot de contrôle identifiant également ce terminal moniteur, chaque terminal (1, 2, 3 ...) comprenant un unité de référence de temps (88) qui émet des signaux de temps réguliers et un circuit de synchronisation (96a, 96) qui mémorise plusieurs périodes de temps prédéterminées représentant chacune le temps de propagation d'un signal jusqu'à ce terminal depuis l'un respectif des terminaux moniteurs, et qui réagit à la réception de chaque mot de contrôle en sélectionnant la période de temps prédéterminée particulière en fonction de l'identité du terminal moniteur et qui ramène au repos l'unité de référence de temps (88) en conséquence, les unités de référence de temps (88) de tous les terminaux étant ainsi toujours synchronisées sur les mêmes valeurs indépendamment du temps de propagation des signaux entre le terminal moniteur actif et chaque autre terminal, et par un circuit (92) à chaque terminal qui réagit aux signaux de temps suivants émis par son unité de référence de temps (88) en déterminant si le terminal soit déclencher une émission de données, la cadence de ces émissions de données n'étant pas affectée par le passage d'un terminal moniteur actif (p.e. 1) à un autre terminal moniteur actif (p.e. 3).

2. Système selon la revendication 1, dans lequel chaque unité de référence de temps (88) est un compteur respectif (88) commandé par une horloge respective, et dans lequel chaque période de temps prédéterminée est un comptage prédéterminé respectif, les compteurs (88) de tous les terminaux (88) étant ainsi toujours synchronisés sur les mêmes valeurs de comptage.

3. Système selon la revendication 1 ou 2, dans lequel les terminaux moniteurs ont respectivement de priorités différentes et prédéterminées, et dans lequel chaque terminal moniteur (p.e. 1 ou 3) comporte un compteur (94, Figure 11) ayant pour fonction de compter le nombre des mots de contrôle non reçus par ce terminal, et un circuit (p.e. FF-24 et FF 25) ayant pour fonction que le terminal moniteur (p.e. 1 ou 3) prenne la commande du système quand le comptage du compteur (94) atteint un comptage prédéterminé qui est différent pour chacun des terminaux moniteurs (p.e. 1 ou 3) et dépend de leurs priorités relatives.

4. Système selon la revendication 1, 2 ou 3, dans lequel la chaîne continue comprend une paire de boucles fermées complémentaires, chaque terminal de diffusion comprenant des circuits pour émettre simultanément des données sur chacune desdites boucles, les données circulant à partir du terminal de diffusion dans des sens opposés dans chaque boucle.

FIG_1
FIG_2

# FIG_3

# FIG_4

FIG_5

FIG_6

FIG_7

# FIG_8

## TRANSMISSION FORMAT

| | | | | | |
|---|---|---|---|---|---|
| CONTROL WORDS | FRAME | ID | CONT. | TIME FRAME | PARITY |
| | 5 | 2 | 2 | 3 | 4 |

| | | | | | |
|---|---|---|---|---|---|
| PREAMBLE | FRAME | ID | TS | SOURCE | P |
| | 5 | 2 | 2 | 3 | 1 |

| | | | | | | |
|---|---|---|---|---|---|---|
| TEXT | FRAME | ID | N | SINK | P | DATA |
| | 5 | 2 | 1 | 6 | 1 | |

| | | | | |
|---|---|---|---|---|
| TEXT (WORDS AFTER 1ST WORD OF MULTI-WORD MESSAGE.) | FRAME | ID | N | DATA |
| | 5 | 2 | 1 | |

| | | |
|---|---|---|
| SIGNATURE | FRAME | ID |
| | 5 | 2 |

TIME, CLOCK PERIODS ⟶

FIG _ 9

FIG. 10

# FIG_10A

FIG_11

FIG_12

FIG. 13